# EUROPEAN PATENT SPECIFICATION

(11) **EP 2 873 546 B1**
(45) Date of publication and mention of the grant of the patent: **29.06.2016**
(21) Application number: 14190235.3
(22) Date of filing: 24.10.2014
(51) Int. Cl.: B60K 37/06

(54) **Saddle type vehicle with display on the steering handle for indicating appropriate vehicle characteristic changes**
Sattelfahrzeug mit auf dem Lenker montierter Anzeige zum Anzeigen von angepasster Fahrzeugcharakteristikänderung
Véhicule à selle avec affichage au guidon d'indication de changement optimal de caractéristiques de fonctionnement

(30) Priority: 31.10.2013 JP 2013227008
(43) Date of publication of application: 20.05.2015
(73) Proprietor: Yamaha Hatsudoki Kabushiki Kaisha, Iwata-shi, Shizuoka 438-8501 (JP)
(72) Inventor: Watanabe, Takashi, Iwata-shi, Shizuoka 438-8501 (JP); Yagi, Toshiki, Iwata-shi, Shizuoka 438-8501 (JP)
(74) Representative: Grünecker Patent- und Rechtsanwälte PartG mbB

(56) References cited:
- DE-A1- 19 922 745
- DE-A1-102007 011 054
- DE-A1-102012 204 698
- DE-A1-102013 205 333

## Description

### BACKGROUND OF THE INVENTION

The present invention relates to a saddle type vehicle, and particularly relates to a saddle type vehicle that the rider is allowed to change setting contents.

A known saddle type vehicle is provided with plural devices that allow a characteristic state of a vehicle characteristic such as a traction control system to be changed to another characteristic state. As an example of such a vehicle in which a vehicle characteristic is changeable to another characteristic state, Patent Literature 1 (Japanese Patent No. 4072921) recites that an engine output is changed while the vehicle is running. Patent Literature 1 further recites that a currently-selected engine output characteristic is displayed on a display.

### SUMMARY OF THE INVENTION

There are cases where whether to be able to change a vehicle characteristic to another characteristic state is determined in accordance with the state of the vehicle or the rider. In such cases, when the rider attempts to change a characteristic state of a vehicle characteristic, the state of the vehicle characteristic is changed if it is a time when a change of the vehicle characteristic to another characteristic state is allowed, but the characteristic state of the vehicle characteristic is not changed if it is a time when a change of the vehicle characteristic to another characteristic state is not allowed. If the current characteristic state of the vehicle characteristic is displayed on a display as in the known technology, the rider is allowed to confirm, with reference to the image on the display, whether the characteristic state of the vehicle characteristic has been changed. For example, when the rider attempts to change a characteristic state of a vehicle characteristic, a displayed image indicating the characteristic state of the vehicle characteristic on the display is changed if it is a time when the change of the vehicle characteristic to another characteristic state is allowed. This allows the rider to recognize that the vehicle characteristic has been changed to another characteristic state.

However, when the rider attempts to change a characteristic state of a vehicle characteristic, the image on the display is unchanged if it is a time when a change of the vehicle characteristic to another characteristic state is not allowed. Therefore the rider must check the displayed image on the display after attempting to change the characteristic state of the vehicle characteristic, and attempt again to change the characteristic state of the vehicle characteristic if the displayed image is unchanged. To put it differently, the rider must repeatedly attempt to change the characteristic state of the vehicle characteristic and check the displayed image on the display, until a time when a change of the vehicle characteristic to another characteristic state is allowed comes. As such, in case where whether to be able to change a vehicle characteristic to another characteristic is determined in accordance with the state of the vehicle, the rider, or the like, even if the rider wishes to change a vehicle characteristic to another characteristic state, the rider is in some cases inconveniently required to repeatedly check the displayed image on the display after repeatedly attempting to change the characteristic state of the vehicle characteristic.

A saddle type vehicle according the preamble of claim 1 is also known from DE102012204698A1.

An object of the present invention is to provide a saddle type vehicle which allows a change of a vehicle characteristic to another characteristic state without requiring time and effort, even if whether to be able to change a vehicle characteristic to another characteristic state is determined in accordance with the state of the vehicle, the rider, or the like. Such an object is achieved by a saddle type vehicle according to claim 1.

A saddle type vehicle of the present invention includes: a vehicle body frame supporting a power source; a seat mounted on the vehicle body frame; a steering handle provided forward of the seat; a right grip section and a left grip section which are provided at a right end portion and a left end portion of the steering handle in a vehicle left/right direction, respectively; a display unit which is provided forward of the seat in a vehicle forward/rearward direction and between the right grip section and the left grip section in the vehicle left/right direction, and includes a display surface; an operation unit which is supported by the steering handle, is configured to be operable by a hand gripping at least one of the right grip section and the left grip section, and is electrically connected to the display unit; a vehicle characteristic change controller with which one of a first vehicle characteristic and a second vehicle characteristic, which are different from each other, is selectable in accordance with the content of an operation of the operation unit, and for each of the first vehicle characteristic and the second vehicle characteristic, switching between a state in which a change to another characteristic state is possible and a state in which the change is not possible is performed based on a state of at least one of a vehicle and a rider; a state obtaining unit configured to obtain the state of at least one of the vehicle and the rider; and a determination controller configured to determine whether each of the first vehicle characteristic and the second vehicle characteristic is changeable to another characteristic state based on the state obtained by the state obtaining unit, characterized in that, based on a result of determination by the determination controller, the display unit is configured to display, on the display surface, a first vehicle characteristic icon indicating the first vehicle characteristic and a second vehicle characteristic icon indicating the second vehicle characteristic in such a way that, an icon of a vehicle characteristic which is currently selected and is changeable to another characteristic state is in a first aspect, an icon of a vehicle characteristic which is currently selected and is not changeable to another characteristic state is in a second aspect different from the first aspect, and an icon of a vehicle characteristic which is not currently selected is in a third aspect which is different from both the first aspect and the second aspect, and switching between the first aspect, the second aspect, and the third aspect occurs while the vehicle is running.

According to the present invention, each icon is displayed in the first aspect when the vehicle characteristic is changeable to another characteristic state or displayed in the second aspect when the vehicle characteristic is not changeable to another characteristic state. This allows the rider to recognize whether the vehicle characteristic has become changeable to another characteristic state by checking whether the display state of the icon has changed to another aspect. The rider is therefore able to change the state of the vehicle characteristic after recognizing that the vehicle characteristic has become changeable to another characteristic state with reference to the display state of the icon. For this reason, even if whether to be able to change a vehicle characteristic to another characteristic state is determined in accordance with the state of the vehicle and/or the rider, it is unnecessary to repeatedly check the image display each time after attempting a change.

Meanwhile, when there are plural vehicle characteristics, if the display states of characteristics other than the characteristic on which the rider focuses are also changed, the rider cannot easily concentrate on the focused characteristic. In this regard, in the present invention, the display state of the vehicle characteristic icon is switched between the first aspect and the second aspect only for the currently-selected vehicle characteristic. For a vehicle characteristic which is not currently selected, the vehicle characteristic icon is set in the third aspect. With this, the rider can easily focus on the selected characteristic and easily recognize that the vehicle characteristic has become changeable to another characteristic state. Therefore, once a vehicle characteristic for which the rider wishes to change the characteristic state is selected, the rider is able to promptly recognize that the vehicle characteristic is in the changeable state. As such, according to the present invention, it is possible to easily recognize that a target vehicle characteristic is changed to another characteristic state, even if there are plural vehicle characteristics. It is therefore easy to change a target vehicle characteristic among plural vehicle characteristics to another characteristic state. It is noted that the icons are stylized simple pictures of objects.

Preferably, the saddle type vehicle of the present invention further includes a related characteristic storage configured to store plural related characteristics in each of which a first vehicle characteristic state, which is one of the characteristic states of the first vehicle characteristic, is associated with a second vehicle characteristic state, which is one of the characteristic states of the second vehicle characteristic, wherein the related characteristic storage is configured to store at least a first related characteristic and a second related characteristic, one of which is selected based on the content of an operation of the operation unit. More preferably, based on the state obtained by the state obtaining unit, the determination controller is configured to determine that the related characteristic is changeable to another related characteristic when the vehicle is not running and determining that the related characteristic is not changeable to another related characteristic when the vehicle is running. Even more preferably, one of the related characteristic, the first vehicle characteristic, and the second vehicle characteristic is selectable based on the content of an operation of the operation unit. Even further preferably, based on the result of determination by the determination controller, the display unit is configured to display, on the display surface, a related characteristic icon, which indicates the related characteristic, in the first aspect when the related characteristic is currently selected and changeable to another related characteristic, in the second aspect when the related characteristic is currently selected and not changeable to another related characteristic, or in the third aspect when the related characteristic is not currently selected.

According to this arrangement, the aspect of the related characteristic is not changed while the vehicle is running, even if the related characteristic is selected. For this reason, when it is unnecessary to operate the vehicle characteristics during the running, the selection of the related characteristic makes it possible to avoid the rider to be distracted by image display.

Preferably, the saddle type vehicle of the present invention is arranged such that the operation unit includes a first switch and a second switch which are different from each other. More preferably, each time the first switch is operated once, a currently-selected vehicle characteristic is changed once to another vehicle characteristic. Even more preferably, when the currently-selected vehicle characteristic is changeable to another characteristic state, each time the second switch is operated once, the characteristic state of the currently-selected vehicle characteristic is changed by one level.

In the present invention, the switching between the aspects in response to whether a change in the vehicle characteristic becomes possible is carried out only for the selected vehicle characteristic. According to this arrangement, the currently-selected vehicle characteristic is changeable only by operating the first switch once, and the characteristic state is then changeable by operating the second switch. As such, because the selected vehicle characteristic is promptly changeable, it is easy to promptly check whether another vehicle characteristic has become changeable.

Preferably, the saddle type vehicle of the present invention is arranged such that the display unit is configured to display, on the display surface, the first vehicle characteristic icon and the second vehicle characteristic icon to be lined up in the vehicle left/right direction. More preferably, the second switch is operable by an action of the rider in two directions along the circumference of the one of the right grip section and the left grip section, and when the currently-selected vehicle characteristic is changeable to another characteristic state, the characteristic state of the currently-selected vehicle characteristic is changed by one level if the second switch is operated once in one of the two directions, and the characteristic state of the currently-selected vehicle characteristic is changed by one level in the opposite direction if the second switch is operated once in the other one of the two directions.

According to this arrangement, while the vehicle characteristic icons are lined up in the left/right direction on the display surface of the display, the second switch for changing the characteristic state is operated in two circumferential directions by an action of the rider in the circumferential directions of the grip (e.g., the movement of a finger). This encourages the rider to understand that the visual direction of switching of the selected vehicle characteristic intersects the direction of movement in which the characteristic state is changed. The rider is therefore less likely to confuse the operation to switch the selected vehicle characteristic with the operation to change the characteristic state.

### BRIEF DESCRIPTION OF THE DRAWINGS

FIG. 1 is a side view of a motorcycle of an embodiment of the present invention.
FIG. 2A shows a display surface of a display unit when viewed in a direction indicated by the arrow A in FIG. 1. FIG. 2B shows an area on the display surface of the display unit on which a related characteristic icon and characteristic icons are displayed, indicating aspects of the related characteristic icon and the characteristic icons when a related characteristic is selected and changeable. FIG. 2C shows a state in which the related characteristic has been changed from that of FIG. 2B.
FIG. 3 is a functional block diagram of the structure of a control system of a motorcycle.
FIG. 4 shows the area on the display surface of the display unit on which the related characteristic icon and the characteristic icons are displayed, indicating a state in which the aspect (non-changeable aspect) of an icon is different from the aspects (each of which is a non-selected aspect) of the other icons.
FIG. 5A shows the aspects of the related characteristic icon and the characteristic icons when a PWR characteristic is selected and in a non-changeable state. FIG. 5B and FIG. 5C show the aspects of the related characteristic icon and the characteristic icons when the PWR characteristic is selected and in a changeable state.
FIG. 6 is a flowchart of a control operation executed by a characteristic changer to update the aspects of the related characteristic icon and the characteristic icons in response to an operation input through a setting operation unit.

### DESCRIPTION OF THE PREFERRED EMBODIMENTS

The following will describe a saddle type vehicle of an embodiment of the present invention, with a motorcycle 1 taken as an example. It is noted that the saddle type vehicle according to the present invention is not limited to the motorcycle 1. The saddle type vehicle is of any type of vehicle on which an occupant rides. The saddle type vehicle may be a motorcycle of an off-road type, a scooter type, a moped type, or any other types. Examples of the saddle type vehicle of the present invention encompass tricycles, four-wheeled buggies (ATVs: All Terrain Vehicles), and personal water crafts. In the descriptions below, forward/rearward directions indicate forward and rearward directions from the viewpoint of the rider R sitting on a later-described seat 11 of the motorcycle 1, whereas left/right directions indicate leftward and rightward directions (vehicle width directions) from the viewpoint of the rider R sitting on the seat 11. The directions indicated by arrows F and B indicate forward and rearward directions, respectively. The directions indicated by arrows L and R indicate leftward and rightward directions, respectively.

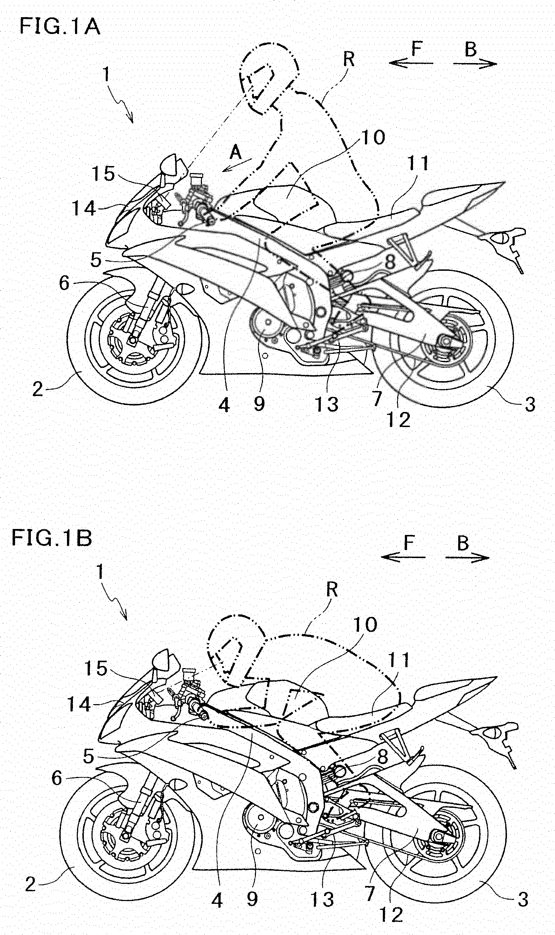

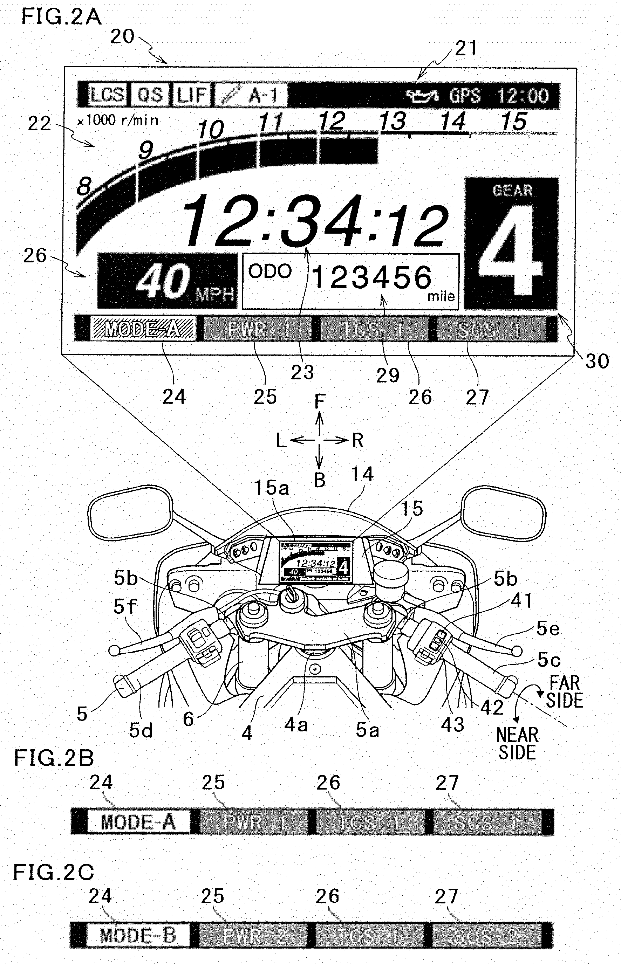

As shown in FIG. 1, the motorcycle 1 is provided with a front wheel 2, a rear wheel 3, a vehicle body frame 4, and a seat 11. The seat 11 is supported by the vehicle body frame 4. As shown in FIG. 2A, a head pipe 4a is provided forward of the seat 11 of the vehicle body frame 4. Into the head pipe 4a, a steering shaft (not illustrated) is rotatably inserted. To an upper end of the steering shaft is fixed a handle crown 5a.

To the left and right end portions of the handle crown 5a, upper end portions of the front forks 6 are fixed, respectively. The lower end portions of these front forks 6 support the front wheel 2. To the upper end portions of the two front forks, handlebars 5b are fixed, respectively.

On the peripheral surfaces of the two handlebars 5b, grips 5c and 5d (right grip section and left grip section) are attached, respectively. The right grip 5c is a throttle grip. To the right handlebar 5b is attached a brake lever 5e, whereas to the left handlebar 5b is attached a clutch lever 5f. On the handle crown 5a and the handlebars 5b, plural types of switches are provided. The handlebars 5b and the grips 5c and 5d constitute a handle 5 (steering handle). The handle 5 extends leftward and rearward and also extends rightward and rearward.

In the vicinity of the grip 5c, a far-side switch 41, a middle switch 42, and a near-side switch 43 are provided. These three switches are supported by the handle 5. These switches are provided to the immediate left of the grip 5c to allow a hand (finger) of the rider R gripping the grip 5c to reach the switches. The three switches are, along the circumference of the handle 5, disposed such that the far-side switch 41 (second switch), the middle switch 42 (first switch), and the near-side switch 43 (second switch) are lined up in this order from the far side to the near side in FIG. 2A. The rider R is therefore able to operate these switches while gripping the grip 5c. The three switches may be disposed in a range reachable by a hand (finger) of the rider R gripping the grip 5d. Alternatively, at least one of the switches may be provided in the vicinity of the grip 5c whereas the remaining switches may be provided in the vicinity of the grip 5d. For example, the far-side switch 41 and the near-side switch 43 are provided in the vicinity of the grip 5c whereas the middle switch 42 is provided in the vicinity of the grip 5d.

As the rider R moves, for example, the thumb of his/her right hand gripping the grip 5c toward the switches, the finger tip is moved to a position where the far-side switch 41, the middle switch 42, and the near-side switch 43 can be pressed. As the rider R stretching the finger moves the finger tip toward the far side or near side along the circumference of the handle 5, the finger tip is positioned at each of the three switches. The far-side switch 41 is provided at the farthest, the near-side switch 43 is provided at the nearest, and the middle switch 42 is provided between these switches. As such, the far-side switch 41 and the near-side switch 43 are operable by an action of moving the finger tip toward the far side or the near side along the circumference of the grip 5c. The middle switch 42 is operable at a position between the far-side switch 41 and the near-side switch 43. Hereinafter, these switches may be abbreviated as the switch 41, the switch 42, and the switch 43.

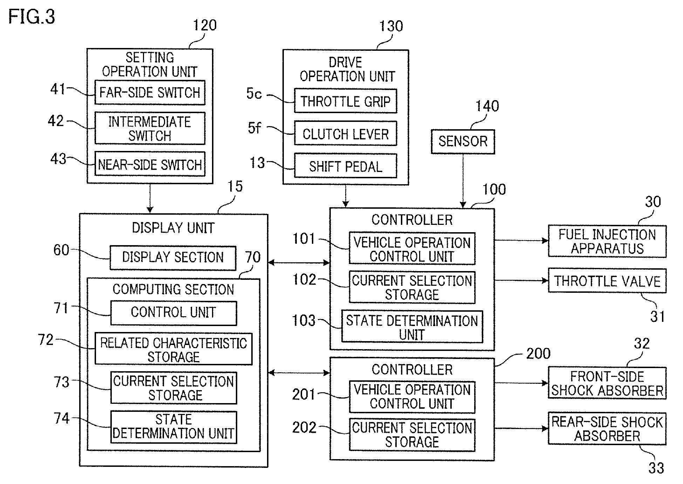

Each of the front forks 6 is provided with a front-side oil-type shock absorber 32 (see FIG. 3) absorbing vibrations in the up/down directions. The front-side shock absorber 32 includes an electronic control valve (not illustrated) which is arranged so that the flow resistance of the hydraulic oil is electronically adjustable. As the flow resistance of the hydraulic oil is adjusted by controlling the valve, the damping force characteristic of the front-side shock absorber 32 is adjustable.

At a rear portion of the vehicle body frame 4, the front end portion of the swingarm 7 is supported in a swingable manner. The rear end portion of this swingarm 7 supports the rear wheel 3. A part of the swingarm 7 which is different from the swinging center of the swingarm 7 is connected with the vehicle body frame 4 via a rear suspension 8 which is configured to absorb shocks in the up/down directions. The rear suspension 8 is provided with a rear-side shock absorber 33 (see FIG. 3) which is of the same type as the front-side shock absorber 32. The rear-side shock absorber 33 includes an electronic control valve (not illustrated). As the flow resistance of the hydraulic oil is adjusted by controlling the valve, the damping force characteristic of the rear-side shock absorber 33 is adjustable.

Furthermore, the vehicle body frame 4 supports a water-cooled engine (power source) 9. This engine 9 may be of an air-cooled type. The vehicle body frame 4 may directly support the engine 9 or indirectly support the engine 9 through another member. Upward of the engine 9 is provided a fuel tank 10. Rearward of the fuel tank 10 is provided the seat 11. Upward of the engine 9 are provided a throttle body and an air cleaner (not illustrated). Into the engine 9, air cleaned by the air cleaner flows through an intake passage in the throttle body. On the intake passage of the throttle body, a throttle valve 31 (see FIG. 3) is provided to change the amount of air flowing in the passage. The throttle body is provided with a fuel injection apparatus 30 (see FIG. 3). The fuel in the fuel tank 10 is injected by the fuel injection apparatus 30. The air introduced through the throttle body is introduced into a combustion chamber in the engine 9, together with the fuel injected from the fuel injection apparatus 30. The output characteristic of the engine 9 is changeable by adjusting an amount of the injected fuel from the fuel injection apparatus 30 and the aperture of the throttle valve 31. The fuel injection apparatus 30 may be provided in the engine 9.

Rearward of the engine 9 is provided a transmission (not illustrated) including multi-stage shift gears. The driving force of the engine 9 is transmitted to the rear wheel 3 via the transmission and the chain 12. To the left of the transmission is provided a shift pedal 13 used for switching the gears of the transmission.

Upward of the front wheel 2 and forward of the handle 5, a front cowling 14 is provided. Between the front cowling 14 and the handle 5 is disposed a display unit 15. The display unit 15 may be disposed at any position on condition that the position is between the grip 5c and the grip 5d in the left/right direction and forward of the seat 11 in the forward/rearward direction. For example, the display unit 15 may be provided upward of the head pipe 4a. The display unit 15 is provided with a rectangular display surface 15a having long sides which are in parallel to the left/right direction and short sides which are in parallel to the forward/rearward direction. The display unit 15 is disposed to be inclined in the forward/rearward direction and the up/down direction such that the display surface 15a faces rearward and upward. The display unit 15 includes a display section 60 having the display surface 15a and an computing section 70 configured to control display contents on the display section 60 (see FIG. 3). In the display section 60, the display surface 15a of the display unit 15 is constituted by a dot matrix display capable of performing color image display, such as a liquid crystal display, a plasma display, and an organic EL display. The computing section 70 executes arithmetic operations based on input signals from the switches 41 to 43. The details of the structure and the processing details of the computing section 70 will be given later.

The display surface 15a of the display section 60 displays information regarding a vehicle characteristic or the like. As the power is supplied to the display unit 15 in response to an operation of a switch, the display surface 15a automatically displays a basic screen in a track mode or a street mode. FIG. 2A shows an example of the basic screen 20 in the track mode. The basic screen 20 in the track mode and the basic screen in the street mode are switched by an operation of a switch.

The basic screen 20 in the track mode includes a vehicle state icon group 21, an engine revolution speed display 22, a lap time display 23, a related characteristic icon 24, characteristic icons 25 to 27, a vehicle speed display 28, a travel distance display 29, and a gear position display 30. In the present embodiment, icons are stylized simple pictures of objects. There are icons indicate levels or the like by numbers, and icons indicating names by simplified character strings.

The vehicle state icon group 21 includes warning icons such as a hydraulic pressure warning icon and icons indicating vehicle states such as a vehicle characteristic. The icons indicating the vehicle states include a "LCS" icon, a "QS" icon, a "LIF" icon, and a suspension characteristic icon. The "LCS" icon is displayed when a later-described launch control system characteristic is in the on state. The icon is not displayed when the characteristic is in the off state. The "QS" icon is displayed when a later-described quick shift system characteristic is in the on state. The icon is not displayed when the characteristic is in the off state. The "LIF" icon is displayed when a later-described lift control system characteristic is in the on state. The icon is not displayed when the characteristic is in the off state. The suspension characteristic icon indicates the characteristic state of a later described suspension characteristic. The engine revolution speed display 22 includes bar display having a length corresponding to a rotation speed. The lap time display 23 indicates a result of measurement of a lap time.

The related characteristic icon 24 indicates which one of later-described related characteristics A to D is currently in use. The characteristic icons 25 to 27 are icons indicating a power characteristic, a traction control system characteristic, and a slide control system characteristic which are described later and the characteristic states of these characteristics. The details of the characteristics and the icons will be given later.

Now, the configuration of the control system of the motorcycle 1 will be described with reference to FIG. 3. The control system of the motorcycle 1 is constituted by members such as a display unit 15, controllers 100 and 200, a setting operation unit 120, a drive operation unit 130, and a sensor unit 140. These member are electrically connected with one another. The setting operation unit 120 and the drive operation unit 130 receive an operation from the rider R. The setting operation unit 120 is constituted by the above-described switches 41 to 43, and is mainly used for changing the setting of a vehicle characteristic. The setting operation unit 120 corresponds to an operation unit of the present invention. The drive operation unit 130 is constituted by members such as the throttle grip 5c, the clutch lever 5f, and the shift pedal 13 described above, and is mainly used for the driving by the rider R. The sensor unit 140 includes sensors of different types such as a GPS positioning unit, speed sensors configured to detect the rotation speeds of the front wheel 2 and the rear wheel 3, and an accelerator position sensor. The controller 100 and the computing section 70 which will be described later obtain the states of the motorcycle 1 and the rider R based on a detection result of the sensor unit 140. The functions of the controller 100 and the computing section 70 obtaining the states of the motorcycle 1 and the rider R based on the detection result of the sensor unit 140 correspond to the functions of a state obtaining unit of the present invention.

Each of the controllers 100 and 200 is composed of hardware such as a CPU (Central Processing Unit), a ROM (Read Only Memory), a RAM (Random Access Memory), an ASIC (Application Specific Integrated Circuit) and software such as program data stored in the ROM and the RAM. The CPU executes information processings corresponding to the contents of operations that the drive operation unit 130 receives and detection results of the sensor unit 140, based on the software such as the program data. The ASIC controls the operations of the members based on a result of the information processing above. In this manner, the following functional parts of the controllers 100 and 200 are realized.

As shown in FIG. 3, the controller 200 includes a vehicle operation control unit 201 and a current selection storage 202. The vehicle operation control unit 201 controls a suspension characteristic (which will be abbreviated as SUS characteristic). The SUS characteristic is a characteristic regarding the control of the front-side shock absorber 31 and the rear-side shock absorber 32. The vehicle operation control unit 201 controls the damping force characteristic of each of the pressure side and the extension side of each shock absorber. For each damping force characteristic of the SUS characteristic, plural levels are prepared. The current selection storage 202 stores the currently-selected level of each damping force characteristic of the SUS characteristic. The vehicle operation control unit 201 controls each shock absorber in accordance with the level stored in the current selection storage 202. For example, the vehicle operation control unit 201 controls the shock absorber such that the damping force increases as the level of each damping force characteristic increases.

In the present embodiment, the SUS characteristic is operable on a setting screen different from the basic screen 20. When the setting operation unit 120 is operated on the setting screen, the content of the SUS characteristic after being changed in accordance with the operation is sent from the display unit 15 to the controller 200 as described below. The details of this operation on the setting screen are not given. The controller 200 updates the content stored in the current selection storage 202 to the content sent from the display unit 15. Therefore, when the content sent from the display unit 15 is different from the content stored in the current selection storage 202, the content stored in the current selection storage 202 is changed to the content sent from the display unit 15.

As shown in FIG. 3, the controller 100 includes a vehicle operation control unit 101, a current selection storage 102, and a state determination unit 103. The vehicle operation control unit 101 controls the output characteristic of the engine 9 by adjusting the amount of injected fuel from the fuel injection apparatus 30 and the aperture of the throttle valve 31. By this control of the operations of the parts of the vehicle, the vehicle operation control unit 101 controls different types of vehicle characteristics. Examples of the vehicle characteristics to be controlled include a power characteristic, a traction control system characteristic, a slide control system characteristic, a launch control system characteristic, a quick shift system characteristic, and a lift control system characteristic. Hereinafter, these characteristics may be abbreviated as follows: power to PWR, traction control system to TCS, slide control system to SCS, launch control system to LCS, quick shift system to QS, and lift control system to LIF.

In the present embodiment, when the basic screen 20 is displayed, three characteristics, i.e., the PWR characteristic, the TCS characteristic, and the SCS characteristic are selectable as the rider R operates the setting operation unit 120. Any two of these three vehicle characteristics correspond to a first vehicle characteristic and a second vehicle characteristic of the present invention. Each of the three vehicle characteristics has plural characteristic states. As described later, each of the three vehicle characteristics becomes changeable to another characteristic state in accordance with the state of at least one of the vehicle and the rider. In regard to any two of the characteristics, the vehicle operation control unit 101 therefore corresponds to a first vehicle characteristic change controller and a second vehicle characteristic change controller of the present invention. Operations such as selection of a vehicle characteristic and change to another characteristic state will be described later.

The following will describe the vehicle characteristics above, mainly three vehicle characteristics which are operable by the rider R using the basic screen 20. The PWR characteristic is a characteristic regarding the degree of change in the aperture of the throttle with respect to the operation quantity of the throttle grip 5c. The TCS characteristic is a characteristic regarding the traction control. The traction control is performed to restrain the slipping due to a difference between the rotation speeds of the front wheel 2 and the rear wheel 3 calculated from detection results of the sensor unit 140. The SCS characteristic is a characteristic regarding slide control performed to restrain the side slipping of the motorcycle 1. This slide control is performed based also on, for example, the rotation speeds of the front wheel 2 and the rear wheel 3 calculated from detection results of the sensor unit 140.

The LCS characteristic is a characteristic regarding launch control performed to smoothly and rapidly start the motorcycle 1 in the stopped state. The QS characteristic is a characteristic regarding quick shift with which the shift up is achieved without requiring the operation of the throttle grip 5c and the clutch lever 5d. The LIF characteristic is a characteristic regarding lift control performed to restrain the lift up of the front wheel 2 while the vehicle is running. The SUS characteristic is a characteristic regarding the damping force control of the front-side shock absorber 32 and the rear-side shock absorber 33. The LCS characteristic, the QS characteristic, and the SUS characteristic are not controllable on the basic screen 20 but are controllable on another setting screen. This setting screen is displayed in place of the basic screen 20 as a switch on the motorcycle 1 is operated when the motorcycle 1 stops (i.e., is not running). The operations of this setting screen are not described.

Each of the PWR characteristic, the TCS characteristic, and the SCS characteristic has plural states of different levels, as characteristic states. Each of the levels corresponds to the degree of control of each characteristic. For example, the PWR characteristic is controlled by the vehicle operation control unit 101 in such a way that, the higher the level is, the smaller the output of the engine 9 with respect to a predetermined operation quantity of the throttle grip 5c is. In case of the TCS characteristic, the characteristic is controlled such that, the higher the level is, the higher the degree of restraint of the slipping is. Except for the PWR characteristic, an on state and an off state are prepared for the vehicle characteristics. When a characteristic is in the off state, no control is performed by the vehicle operation control unit 101. This off state is one of the characteristic states of each characteristic.

The current selection storage 102 stores the currently-selected level of each of the PWR characteristic, the TCS characteristic, the SCS characteristic, the LCS characteristic, the QS characteristic, and the LIF characteristic. In one setting example (hereinafter, setting example S), the current selection storage 102 stores a level 1 for each of the PWR characteristic, the TCS characteristic, and the SCS characteristic. The vehicle operation control unit 101 controls each vehicle characteristic in accordance with the content stored in the current selection storage 102. When the current selection storage 102 stores the setting example S, the vehicle operation control unit 101 performs control in line with the level 1 for each of the PWR characteristic, the TCS characteristic, and the SCS characteristic.

As described later, to the controller 100, the content stored in a related characteristic storage 72 of the display unit 15 is regularly sent from the display unit 15. The content sent to the controller 100 is used for updating the content stored in the current selection storage 102 in the controller 100, regarding the vehicle characteristics such as the PWR characteristic, the TCS characteristic, and the SCS characteristic. When the content having been sent is different from the content stored in the current selection storage 102 in the controller 100, the characteristic state of each vehicle characteristic is changed as the content stored in the current selection storage 102 is updated in line with the content having been sent.

The characteristic state stored in the current selection storage 102 includes an important content regarding the control of the vehicle by the vehicle operation control unit 101. For this reason, in the present embodiment, for each of the vehicle characteristics such as the PWR characteristic, the TCS characteristic, and the SCS characteristic, a state changeable to another characteristic state (hereinafter, changeable state) and a state not changeable to another characteristic state (hereinafter, non-changeable state) are prepared. Whether a characteristic is in the changeable state or the non-changeable state is determined in accordance with the state of at least one of the motorcycle 1 and the rider R. The state of the motorcycle 1 includes the state of a speed, a location, a vehicle characteristic, an engine revolution speed, or the like. The speed and location of the motorcycle 1 are detected by a speed sensor and a GPS positioning unit in the sensor unit 140. The state of the vehicle characteristic indicates a current characteristic state of the TCS characteristic or the like, and is obtained by making reference to the content stored in the current selection storage 102. Examples of the state of the rider R include the operation state of the accelerator. The operation state of the accelerator is detected by an accelerator position sensor in the sensor unit 140.

The state determination unit 103 obtains the state of the motorcycle 1 and/or the rider R from a detection result of the sensor unit 140 and the content stored in the current selection storage 102. The state determination unit 103 then determines whether each vehicle characteristic is in the changeable state or in the non-changeable state, based on the obtained state.

Specific conditions for determining whether a characteristic is in the changeable state or in the non-changeable state by the state determination unit 103 are as below. In regard to the PWR characteristic, the TCS characteristic, and the SCS characteristic, the switching between the changeable state and the non-changeable state is performed in accordance with the characteristic state of a predetermined vehicle characteristic and the operation state of the drive operation unit 130, the running state, or the like. In regard to the vehicle characteristics other than the PWR characteristic, the TCS characteristic, and the SCS characteristic, such vehicle characteristics are in the changeable state when the speed of the motorcycle 1 is zero, i.e., when the motorcycle 1 is not running. When the speed of the motorcycle 1 is not zero, i.e., when the motorcycle 1 is running, the vehicle characteristics are in the non-changeable state.

Alternatively, for example, a vehicle characteristic may be in the changeable state when the motorcycle 1 is located within a predetermined range, and in the non-changeable state when the motorcycle 1 is out of the predetermined range. Furthermore, the motorcycle 1 may be arranged such that a range in which a vehicle characteristic is changeable is provided at will along a race course.

For the vehicle characteristic which is determined as being in the changeable state by the state determination unit 103, the controller 100 updates the content stored in the current selection storage 102 in line with the content sent from the display unit 15. When the content sent from the display unit 15 is different from the content stored in the current selection storage 102, the content stored in the current selection storage 102 is changed. Meanwhile, for the vehicle characteristic which is determined as being in the non-changeable state by the state determination unit 103, the controller 100 does not update the content stored in the current selection storage 102.

The controllers 100 and 200 regularly send the content stored in the current selection storages 102 and 202 to the display unit 15. For example, when the content stored in the current selection storage 102 or 202 is changed to the content sent from the display unit 15, the content after the change is, by the regular sending after the change, sent from the controller 100 or 200 to the display unit 15 in a feedback manner. Based on a detection result by the sensor 140, the controller 100 sends the state of the vehicle and/or the rider R to the display unit 15. As described later, this state is used for the determination as to whether an operation of the setting operation unit 120 is valid or not in the display unit 15.

The computing section 70 of the display unit 15 provides for the user an interface for changing the characteristic states of the related characteristic and the vehicle characteristics through the basic screen 20 and by an operation of the setting operation unit 120. The following will detail the structure of the computing section 70 and operations performed by the same.

The computing section 70 is constructed by hardware such as a CPU (Central Processing Unit), a ROM (Read Only Memory), a RAM (Random Access Memory), an ASIC (Application Specific Integrated Circuit) and software such as program data stored in the ROM and the RAM. Based on the software such as the program data, the CPU executes information processings in accordance with the content of an operation received by the setting operation unit 120 or the like. The ASIC controls image display on the display section 60 based on a result of the information processing. As such, the following functional parts of the computing section are realized.

The computing section 70 includes a control unit 71, a related characteristic storage 72, a current selection storage 73, and a state determination unit 74. In regard to the vehicle characteristics such as the PWR characteristic, the TCS characteristic, and the SCS characteristic, the related characteristic storage 72 stores one of the characteristic states of each of the vehicle characteristics in association with the respective characteristic states of the other vehicle characteristics. For example, in case of the setting example S, the levels 1 of the PWR characteristic, the TCS characteristic, and the SCS characteristic, respectively, are associated with one another as a set of the related characteristic, and stored in the related characteristic storage 72. In the present embodiment, four sets of the related characteristics, i.e., a related characteristic A, a related characteristic B, a related characteristic C, and a related characteristic D are stored in the related characteristic storage 72.

To these related characteristics, for example, meanings are suitably attached by the rider R based on his/her preference. For example, the attachment of the meanings is done in accordance with the use environments and conditions of the vehicle, such that the related characteristic A is associated with sunny day, the related characteristic B is associated with cloudy day, the related characteristic C is associated with lightly rainy day, and the related characteristic D is associated with heavily rainy day. In the case above, in accordance with the environment and/or the condition of the use of the motorcycle 1, the rider R operates the setting operation unit 120 to select and use one of the related characteristics A to D. (How to select a related characteristic will be described later.)

The computing section 70 updates the content which is stored in the related characteristic storage 72 and relates to the related characteristic in use (the related characteristic selected by the user), in accordance with the contents which are regularly sent from the controllers 100 and 200 and stored in the current selection storages 102 and 202. Furthermore, the computing section 70 regularly sends, to the controllers 100 and 200, the content which relates to the related characteristic in use and stored in the related characteristic storage 72. The content having been sent is used for updating the contents stored in the current selection storages 102 and 202 in the controllers 100 and 200. As a result, the characteristic state stored in the related characteristic storage 72 in regard to the related characteristic in use mutually corresponds to the characteristic states stored in the current selection storages 102 and 202 in the controllers 100 and 200.

The state determination unit 74 determines whether each of the related characteristic, the PWR characteristic, the TCS characteristic, and the SCS characteristic is in the changeable state or in the non-changeable state. In the present embodiment, the related characteristic becomes in the changeable state on condition that the motorcycle 1 is not running. The state determination unit 74 therefore determines based on the state of the vehicle sent from the controller 100 that the related characteristic is in the non-changeable state, if the vehicle is running. When the vehicle is not running, the state determination unit 74 determines that the related characteristic is in the changeable state. Determination conditions of the PWR characteristic, the TCS characteristic, and the SCS characteristic are identical with the determination condition in the state determination unit 103 on the controller 100 side. The state determination unit 74 performs the above-described determinations based on the state of the vehicle and/or the rider R sent from the controller 100. The state determination unit 74 corresponds to a determination controller of the present invention, because the state determination unit 74 determines whether each vehicle characteristic is in the changeable state or the non-changeable state based on the state of the vehicle and/or the rider R.

The current selection storage 73 stores information indicating which one of the related characteristic and the three vehicle characteristics (hereinafter, the PWR characteristic, the TCS characteristic, and the SCS characteristic will be collectively called in this way) is currently selected as the target of change of the characteristic state.

The control unit 71 controls the content of image display on the display section 60 and changes the content stored in the related characteristic storage 72 for the related characteristic or the vehicle characteristic which is stored in the current selection storage 73 and is the target of change, based on the content of the operation of the setting operation unit 120 which is done by the rider R. However, the control unit 71 changes the content stored in the related characteristic storage 72 in accordance with the operation of the setting operation unit 120 for a characteristic which is determined as being in the changeable state by the state determination unit 74, but the controller does not change, for a characteristic which is determined as being in the non-changeable state by the state determination unit 74, the content stored in the related characteristic storage 72 even if the setting operation unit 120 is operated.

As described above, the computing section 70 sends the content stored in the related characteristic storage 72 to the controllers 100 and 200 by the regular sending. In the controller 200, the content stored in the current selection storage 202 is updated irrespective of the content sent from the display unit 15. The updated content is sent to the display unit 15 by the regular sending. Based on this content having been sent, the computing section 70 updates the content stored in the related characteristic storage 72.

Meanwhile, in the controller 100, when the content stored in the related characteristic storage 72 is sent from the display unit 15, the state determination unit 103 determines again whether each vehicle characteristic is in the changeable state or in the non-changeable state. For a vehicle characteristic determined as being in the changeable state by the state determination unit 103, the content stored in the current selection storage 102 of the controller 100 is changed to the content sent by the computing section 70 to the controller 100. As described above, this changed content is sent from the controller 100 to the display unit 15 in a feedback manner, by the regular sending. The computing section 70 updates the content stored in the related characteristic storage 72 based on the content having been sent in a feedback manner. With this, the state after the change in accordance with the operation of the setting operation unit 120 is reflected to the display unit 15.

Meanwhile, for a vehicle characteristic determined as being in the non-changeable state by the state determination unit 103, the content stored in the current selection storage 102 of the controller 100 is not changed. In this case, by the regular sending, the content which is stored in the current selection storage 102 and to which the change is not reflected is sent from the controller 100 to the display unit 15. The computing section 70 updates the content stored in the related characteristic storage 72 based on the content sent from the controller 100. For this reason, even if the content stored in the related characteristic storage 72 is once changed based on the operation of the setting operation unit 120, the content stored in the related characteristic storage 72 returns to the state before the change, based on the content sent from the controller 100.

The following will detail the processings performed by the control unit 71. The control unit 71 displays the related characteristic icon 24 and the characteristic icons 25 to 27 on the display section 60 at the lower end portion of the basic screen 20 shown in FIG. 2A, with different appearances. These icons relate to the related characteristic and the three vehicle characteristics and are displayed to be lined up in the left/right direction. The icons may be displayed to be lined up in the forward/rearward direction. On the basic screen 20, the rider R is allowed to operate the related characteristic and the three vehicle characteristics. By checking the aspect of each of the related characteristic icon 24 and the characteristic icons 25 to 27, the rider R recognizes the states of the related characteristic and each vehicle characteristic and changes the contents thereof based on the recognition.

The control unit 71 sets the aspect of each icon to include a text indicating the name of each of the related characteristic and the vehicle characteristics, such as "MODE", "PWR", "TCS", and "SCS". On the related characteristic icon 24, the control unit 71 displays a character indicating which one of the related characteristics A to D is the related characteristic currently in use, to the right of the text "MODE". In FIG. 2A, the character "A" indicating the related characteristic A is displayed. Furthermore, based on the content stored in the current selection storage 102 and send from the controller 100 by the regular sending, the control unit 71 displays, on each of the characteristic icons 25 to 27, the characteristic state currently selected in the controller 100, to the right of the text indicating the name of each characteristic. On each the characteristic icons 25 to 27 shown in FIG. 2A, the number "1" indicating that the level is 1 is displayed. In the state shown in FIG. 2A, the control unit 71 sets all icons to appear such that the texts and characters are white and the background color of the texts or the like is light gray. The related characteristic icon 24 is further provided with a while frame. Each icon is rectangular in contour and long in the left/right direction.

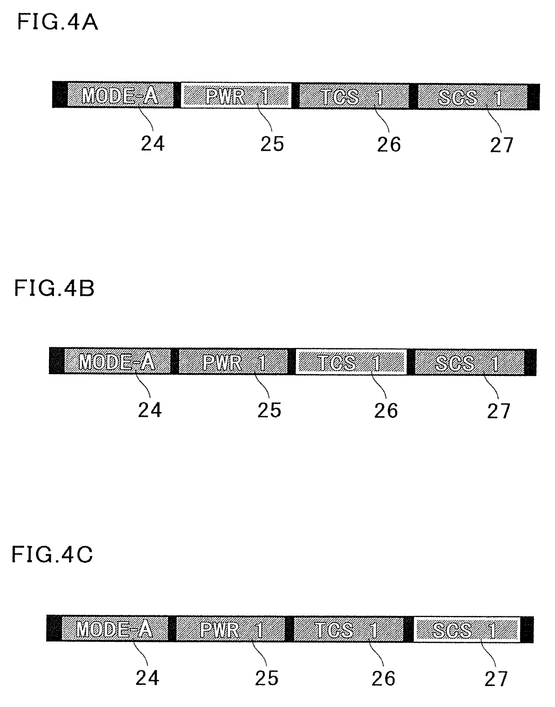

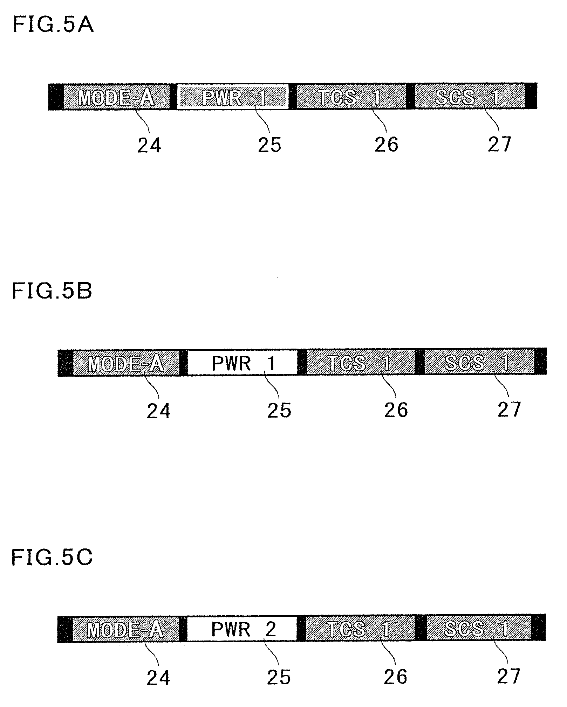

In addition to the above, the control unit 71 displays each icon in one of three display modes which are different from one another. The first display mode is a mode in which the characteristic icons 25 to 27 in FIG. 2A and the related characteristic icons 24, and the characteristic icons 26 and 27 or the like shown in FIG. 4A are set. In this mode, each icon is constituted by the white text and number and the light gray background described above. The second display mode is a mode in which the related characteristic icon 24 shown in FIG. 2A, the characteristic icon 25 shown in FIG. 4A, the characteristic icon 26 shown in FIG. 4B, and the characteristic icon 27 shown in FIG. 4C are set. In this mode, in addition to the first aspect, each icon is provided with a white frame. The third display mode is a mode in which the related characteristic icon 24 shown in FIG. 2B and FIG. 2C and the characteristic icon 25 shown in FIG. 5B and FIG. 5C are set. In this mode, being different from the first and second aspects, in each icon the character and number are displayed in black and the background color is white.

The control unit 71 selects one of the three display modes based on the content stored in the current selection storage 73 and a result of determination by the state determination unit 74. To begin with, for one of the related characteristic and the three vehicle characteristics selected as the target of change, the control unit 71 displays the icon in the third display mode, when the state determination unit 74 determines that the selected one of the characteristics is in the changeable state. Hereinafter, this mode will be referred to as a "changeable aspect" (first aspect). Subsequently, for the currently-selected one of the related characteristic and the three vehicle characteristics, the control unit 71 displays the icon in the second display mode when the state determination unit 74 determines that the selected one of the characteristics is in the non-changeable state. Hereinafter, this mode will be referred to as a "non-changeable aspect" (second aspect). Furthermore, for those related characteristic and three vehicle characteristics which are not currently selected, the control unit 71 displays the icons in the first display mode. Hereinafter, this mode will be referred as a "non-selected aspect" (third aspect).

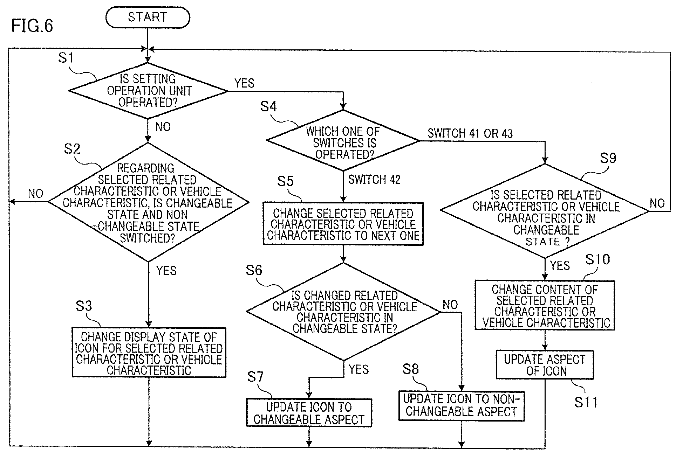

Now, how the control unit 71 performs the control of updating the aspect of each icon based on a result of determination by the state determination unit 74 and an operation of the setting operation unit 120 by the rider R will be described with reference to the flowchart shown in FIG. 6. To begin with, the control unit 71 determines whether the setting operation unit 120 is operated (S1). When it is determined that the setting operation unit 120 is not operated (S1, No), the control unit 71 determines, based on a result of determination by the state determination unit 74, whether the switching between the changeable state and the non-changeable state has occurred, for the related characteristic or the vehicle characteristic (indicated by the content stored in the current selection storage 73) which is currently selected as the target of change (S2). When it is determined that the switching between the changeable state and the non-changeable state has not occurred (S2, No), the control unit 71 returns to the step S1.

When it is determined that the switching between the changeable state and the non-changeable state has occurred in the currently-selected related characteristic or vehicle characteristic (S2, Yes), the control unit 71 changes the aspect of the icon between the changeable aspect and the non-changeable aspect (S3). For example, when the related characteristic is currently selected and it is determined that the related characteristic has been switched from the non-changeable state to the changeable state, the control unit 71 updates the aspect of the related characteristic icon 24 from the non-changeable aspect (e.g., the mode shown in FIG. 2A) to the changeable aspect (e.g., the mode shown in FIG. 2B). When the PWR characteristic is currently selected and it is determined that the PWR characteristic has been switched from the non-changeable state to the changeable state, the control unit 71 updates the aspect of the characteristic icon 25 from the non-changeable aspect (e.g., the mode shown in FIG. 5A) to the changeable aspect (e.g., the mode shown in FIG. 5B). To the contrary, when it is determined that a characteristic has been switched from the changeable state to the non-changeable state, the control unit 71 changes the icon from the changeable aspect to the non-changeable aspect (S3). The control unit 71 then returns to the step S1.

Meanwhile, when it is determined in S1 that the setting operation unit 120 is operated (S1, Yes), the control unit 71 determines which one of the switches 41 to 43 is operated (S4). When it is determined that the switch 42 is operated (S4, switch 42), the control unit 71 changes one of the related characteristic and the three vehicle characteristics which is currently selected as the target of change, to the next characteristic (S5). More specifically, each time the switch 42 is pressed once, the control unit 71 updates one of the related characteristic and the three vehicle characteristics which is stored in the current selection storage 73 as the currently-selected characteristic, in the order as follows one by one: the related characteristic → the PWR characteristic → the TCS characteristic → the SCS characteristic → the related characteristic → and so on.

Subsequently, the control unit 71 determines whether the one of the related characteristic and three vehicle characteristics having been changed in S5 is in the changeable state, based on a result of determination by the state determination unit 74 (S6). When it is determined that the characteristic changed in S5 is in the changeable state (S6, Yes), the control unit 71 changes, from the non-selected aspect to the changeable aspect, the aspect of the icon corresponding to the one of the related characteristic and three vehicle characteristics having been changed in S5 (S7). Meanwhile, when it is determined that the characteristic changed in S5 is not in the changeable state (i.e., in the non-changeable state) (S6, No), the control unit 71 changes, from the non-selected aspect to the non-changeable aspect, the aspect of the icon corresponding to the one of the related characteristic and three vehicle characteristics having been changed in S5 (S8).

For example, when the one of the related characteristic and three vehicle characteristics having been changed in S5 is always in the non-changeable state, the aspect of the corresponding icon is updated in the order of FIG. 2A → FIG. 4A → FIG. 4B → FIG. 4C → FIG. 2A → and so on, each time the switch 42 is pressed once from the state shown in FIG. 2A. Meanwhile, when the characteristic changed in S5, e.g., the PWR characteristic is in the changeable state, the aspect of the corresponding icon is updated in the order of, for example, FIG. 2A → FIG. 5B. When the aspect of the icon is updated in S7 or S8, the control unit 71 returns to the step S1.

If it is determined in S4 that the switch 41 or 43 is operated (S4, switch 41 or 43), the control unit 71 determines whether the currently-selected one of the related characteristic and three vehicle characteristics is in the changeable state, based on a result of determination by the state determination unit 74 (S9). When it is determined that the currently-selected characteristic is not in the changeable state (i.e., in the non-changeable state) (S9, No), the control unit 71 returns to the step S1. When it is determined that the currently-selected characteristic is in the changeable state (S9, Yes), the control unit 71 changes the content of the one of the related characteristic and three vehicle characteristics which is currently selected as the target of change (S10).

For example, assume that the currently-selected characteristic, i.e., the characteristic indicated by the content stored in the current selection storage 73 is the related characteristic. In this case, the control unit 71 changes one of the related characteristics A to D which is currently in use to the next related characteristic (S10). Each time the switch 43 is pressed once, the control unit 71 changes the related characteristic in use in the order of A→B→C→D→A→ and so on one by one. For example, when the switch 43 is pressed once by the rider R in the state shown in FIG. 2B, the related characteristic icon 24 is changed to the aspect shown in FIG. 2C. When the related characteristic currently in use is changed to the next related characteristic in this way, the content stored in the related characteristic storage 72 in regard to the related characteristic after the change is sent to the controller 100 by the regular sending. For example, while the characteristic states of the PWR characteristic, the TCS characteristic, and the SCS characteristic associated with the related characteristic A are regularly sent to the controller 100 before the change, the characteristic states of the PWR characteristic, the TCS characteristic, and the SCS characteristic associated with the related characteristic B are regularly sent to the controller 100 after the change. In the controller 100, the content stored in the current selection storage 102 is updated based on the content sent from the display unit 15. From the controller 100, the updated content is sent to the display unit 15 in a feedback manner. Based on this, the control unit 71 updates the aspects of the related characteristic icon 24 and the characteristic icons 25 to 27 (S11). In FIG. 2C, the numbers displayed on the characteristic icons 25 to 27 indicate the characteristic states associated with the related characteristic B which is the related characteristic after the change. It is noted that, when the switch 41 is pressed, the related characteristic in use is changed in the order opposite to the order in the case of the pressing of the switch 43.

Now, assume that the currently selected characteristic, i.e., the characteristic indicated by the content stored in the current selection storage 73 is one of the three vehicle characteristics. In this case, the control unit 71 changes the characteristic state of the vehicle characteristic, which is associated with the related characteristic in use, to the next characteristic state (S10). More specifically, each time the switch 43 is pressed once, the control unit 71 updates the characteristic state indicated by the content stored in the related characteristic storage 72 in association with the related characteristic currently in use to the next characteristic state (S10).

In S10, once the content stored in the related characteristic storage 72 is changed in accordance with an operation of the setting operation unit 120, the changed content is sent to the controller 100 by the regular sending. As described above, in the controller 100, the state determination unit 103 again determines whether each vehicle characteristic is in the changeable state or in the non-changeable state. Thereafter, for a vehicle characteristic determined as being in the changeable state, the changed content is sent from the controller 100 to the display unit 15 in a feedback manner. With this, the content of the related characteristic storage 72 is eventually fixed to the content after the change. Meanwhile, for a vehicle characteristic determined as being in the non-changeable state by the state determination unit 103, the content before the change is sent from the controller 100 to the display unit 15. In this case, the content stored in the related characteristic storage 72 eventually returns to the state before the change.

As such, in the present embodiment, after whether the vehicle characteristic is in the changeable state or in the non-changeable state is determined in the display unit 15, the same determination is conducted in the controller 100. This is because a time lag between the change of the content stored in the related characteristic storage 72 in the display unit 15 and the receiving of the changed content by the controller 100 is taken into account. That is to say, in regard to the vehicle characteristic which has been determined as being in the changeable state in S9 in the display unit 15, after the content stored in the related characteristic storage 72 is changed in S10, a certain amount of time elapses until the changed content is received by the controller 100. On account of a change in the state of the vehicle and/or the rider R, the vehicle characteristic may have already been changed to the non-changeable state when the controller 100 receives the changed content.

The control unit 71 then updates the aspects of the characteristic icons 25 to 27 based on the content regularly sent from the controller 100 (S11). The characteristic state is updated in the order of the level 1 → the level 2 → ... → the off state. For example, when the rider R presses the switch 43 once in the state shown in FIG. 5B, the screen becomes in the state shown in FIG. 5C if the state determination unit 103 determines in the controller 100 that the PWR characteristic is in the changeable state. In other words, the characteristic state of the PWR characteristic associated with the related characteristic A becomes the level 2, and the aspect of the characteristic icon 25 is updated in accordance with this changed content. It is noted that, when the switch 41 is pressed, the characteristic state is changed in the order opposite to the case of the pressing of the switch 43.

When the aspect of the characteristic icon is updated in S11, the control unit 71 returns to the step S1.

According to the present embodiment described above, on the basic screen 20, the aspect of each characteristic icon is switched between the changeable aspect and the non-changeable aspect in accordance with whether the vehicle characteristic is in the changeable state or in the non-changeable state. This allows the rider to instantly recognize that the characteristic state of a vehicle characteristic becomes changeable or not changeable to another characteristic state, with reference to the aspect of the icon. In the present embodiment, the aspect of an icon is changed between the non-selected aspect, the changeable aspect, and the non-changeable aspect. The non-selected aspect is a mode in which the background color is light gray and the text or the like is white (e.g., the state of the characteristic icon 25 shown in FIG. 2A). In the non-changeable aspect, each icon is provided with a white frame (e.g., the state of the characteristic icon 25 shown in FIG. 5A). In the changeable aspect, the background color is white and the text or the like is black (e.g., the state of the characteristic icon 25 shown in FIG. 5B). As such, when the aspect of an icon is changed between the above-described modes, the state (amount and color) of the light emitted from the display surface 15a is changed. The rider is able to notice a change in the state of the light as long as the icon is in the field of vision. The rider R is therefore able to notice a change in the aspect of the icon in the field of vision while looking ahead, and able to notice a change from the non-changeable state to the changeable state.

Now, assume that the aspect of an icon does not change even if the related characteristic or the vehicle characteristic which is currently selected is changed from the non-changeable state to the changeable state. In this case, the rider R cannot recognize from the icon whether the switching to the changeable state has occurred. The rider R is therefore required to attempt a change in the characteristic state or the like by operating the setting operation unit 120. It is then necessary to check whether the display content of the icon is changed to the content after the change, to confirm whether the characteristic state or the like has been changed. However, when the vehicle characteristic or the like having been selected at the time of the operation of the setting operation unit 120 is in the non-changeable state, the display content of the icon does not change. The rider R is therefore required to repeatedly operate the setting operation unit 120 and check whether the display content of the icon is changed, until the vehicle characteristic or the like having been selected becomes in the changeable state.

Meanwhile, in the present embodiment, the rider R is able to recognize a change of the vehicle characteristic or the like having been selected to the changeable state with reference to a change in the aspect of the icon. The rider R is therefore able to change the characteristic state or the like by operating the setting operation unit 120, after confirming that the vehicle characteristic or the like having been selected has become in the changeable state with reference to the aspect of the icon. For this reason, it is possible to change a currently-selected related characteristic to another related characteristic or change a currently-selected vehicle characteristic to another characteristic state, without repeatedly operating the setting operation unit 120 and checking the display content of the icon.

Meanwhile, the basic screen 20 displays the related characteristic icon 24 and plural characteristic icons, i.e., the characteristic icons 25 to 27. For this reason, if the display states of characteristics other than the characteristic on which the rider R focuses are also changed, the rider R cannot easily concentrate on the focused characteristic. For example, in the state of FIG. 4A, if the aspect of the characteristic icon 26 is changed even though the PWR characteristic is currently selected, the rider R cannot easily concentrate on the characteristic icon 25 corresponding to the PWR characteristic.

In particular, in case of saddle type vehicles such as the motorcycle 1, display contents may be difficult to watch because the display screen must be small as the space for accommodating display devices such as the display unit 15 is limited. Furthermore, as shown in FIG. 1A and FIG. 1B, the rider R frequently changes the posture and changes the line of sight as indicated by the dotted lines in the figures. Because of this, keeping focusing on the content displayed on the display unit 15 tends to be difficult for the rider R.

In this regard, as shown in the flowchart of FIG. 6, the control unit 71 of the present embodiment does not change the aspect of an icon of each of the related characteristic and the three vehicle characteristics which are not currently selected, unless the characteristic corresponding to the icon is selected. The aspect of the characteristic icon is switched only in cases of S3, S7, and S8 shown in FIG. 6. That is to say, the aspect is switched only when it is determined in S2 shown in FIG. 6 that the switching between the changeable state and the non-changeable state has occurred for the currently-selected related characteristic or vehicle characteristic (S2, Yes → S3) or when it is determined in S4 that the switch 42 is pressed (S4, switch 42 → ... → S7 or S8). For example, in the state shown in FIG. 2A, because the related characteristic corresponding to the related characteristic icon 24 is currently selected, the control unit 71 does not change the aspects of the characteristic icons 25 to 27 corresponding to the vehicle characteristics which are not currently selected. This allows the rider R to focus solely on the currently selected vehicle characteristic, and to easily recognize that this characteristic becomes changeable. Therefore, once a related characteristic or a vehicle characteristic that the rider R wishes to change the characteristic state is selected, the rider R is able to promptly recognize that the related characteristic or vehicle characteristic becomes in the changeable state. As such, according to the present invention, it is possible to easily change a target characteristic even if there are a related characteristic and plural vehicle characteristics.

In addition to the above, in the present embodiment, the related characteristic becomes in the changeable state on condition that the motorcycle 1 is not running. For this reason, when the motor cycle 1 is running, the aspect of the related characteristic icon 24 is not changed even if the related characteristic is selected. Therefore, when the related characteristic is selected, the aspects of the icons of the vehicle characteristics other than the related characteristic are not changed, either. As such, when it is unnecessary to operate the vehicle characteristics during the running, the selection of the related characteristic allows the rider R to concentrate on the driving without being distracted by a change in the aspect of an icon.

In addition to the above, in the present embodiment, the switching between the changeable aspect and the non-changeable aspect of an icon is performed only for the currently-selected characteristic. For this reason, to check whether a characteristic which is not currently selected is in the changeable state, it is necessary to operate the setting operation unit 120 to change the current selection. In this regard, in the present embodiment, a currently-selected one of the related characteristic and the three vehicle characteristics is changed to the next one, only by pressing the switch 42 once. As such, because the current selection is serially changeable by a minimum operation, it is easy to check whether another characteristic becomes changeable.

In addition to the above, in the present embodiment, when the currently-selected related characteristic or vehicle characteristic is in the changeable state, the characteristic state such as the level is changed by an operation of the switches 41 and 43. The switches 41 and 43 are operated in such a way that the rider R moves his/her finger in circumferential two directions of the grip 5c. Meanwhile, when the switch 42 is operated, the aspect of an icon is changed from the non-selected aspect to the changeable aspect or the non-changeable aspect. The direction in which the switching proceeds is the left/right direction as shown in FIG. 4A to FIG. 4C. Provided that the switches 41 and 43 are lined up in the axial direction of the grip 5c, the direction of movement in which the switches are operated is in parallel to the axial direction of the grip 5c. Because the axial direction of the grip 5c is relatively in parallel to the left/right direction, the rider R tends to confuse the direction of movement in which the switches 41 and 43 are operated with the visual direction in which the aspects of the icons are switched, when the switches 41 and 43 are lined up in the axial direction of the grip 5c.

In this regard, in the present embodiment, the direction of movement in which the switches 41 and 43 are operated is in the circumferential direction of the grip 5c. This encourages the rider R to understand that the direction of movement in which the switches are operated intersects the direction in which the aspects of the icons are switched. The rider R is therefore less likely to confuse the operation to switch the vehicle characteristic with the operation to change the characteristic state.

### [Variations]

The preferred embodiment of the present invention has been described as above. The present invention, however, is not limited to the embodiment above and may be variously altered within the scope of the claims. Furthermore, below-described variations can be suitably combined with one another and implemented. It is noted that the term "preferable" is non-exclusive in the present specification and indicates "preferable but not limited to".

The following will describe variations of the embodiment described above. In the embodiment above, icons of the related characteristic and the three vehicle characteristics (the PWR characteristic, the TCS characteristic and the SCS characteristic) are displayed at the lower end portion of the basic screen 20, and three modes, i.e., the changeable aspect, the non-changeable aspect, and the non-selected aspect are switched for each icon. Alternatively, an icon may be displayed for a combination other than the related characteristic and three vehicle characteristics, and the three aspects may be switched. For example, icons may be displayed for combinations of the related characteristic, the PWR characteristic, the LCS characteristic, and the QS characteristic, and the three aspects may be switched for each icon. The combinations may not include the related characteristic. For example, the combinations may be constituted by two vehicle characteristics, three vehicle characteristics, or five or more vehicle characteristics.

In the embodiment above, the setting operation unit 120 is constituted by three switches made up of the switches 41 to 43. Alternatively, a switch different from the above may be further provided on the setting operation unit 120. For example, a single wheel switch having the rotation axis which is in parallel to the axis of the grip 5c may be provided. This wheel switch is rotatable toward the far side or the near side. Furthermore, the wheel switch can be pressed along the radial direction. When a rotational operation toward the far side corresponds to the operation of the switch 41, a rotational operation toward the near side corresponds to the operation of the switch 42, and the pressing in the radial direction corresponds to the pressing of the switch 42, the wheel switch can be used as substitutes for the switches 41 to 43. In this case, the rider R touches the wheel switch by, for example, a finger tip, and rotates the wheel switch in two directions, i.e., far and near directions by sliding the finger tip in the circumferential directions of the grip 5c. Alternatively, a rocker switch in which the switches 41 and 43 are integrated may be provided.

In the embodiment above, the related characteristic icon 24 and the characteristic icons 25 to 26 are represented by simplified character strings of the names of the vehicle characteristics and numbers or the like indicating levels. The icons, however, may be represented in different ways. For example, the icons may be represented by figures, other signs, and illustrations, instead of the numbers and texts.

In the embodiment above, in the non-selected aspect the texts or the like are white whereas the background color is gray, in the non-changeable aspect a white frame is added to the appearances in the non-selected aspect, and in the changeable aspect the color of the texts or the like is black whereas the background color is white. In this regard, the modes may be different from one another in a different way. For example, colors other than white and black may be used and the three modes may be arranged to be different from one another in colors. The texts and numbers may be decorated and the three modes may be arranged to be different from one another in terms of the style or existence of the decoration. When icons are represented by signs, illustrations, or the like, the three modes may be different from one another in the contents of the signs or the contents of the illustrations. Furthermore, at least one of the three modes may be represented by a change in the state of the text or the like, and the three modes may be arranged to be different from one another in the manner of change. For example, visual expression may be arranged such that, while the texts or the like are not changed in the non-changeable aspect, the texts or the like blink in the changeable aspect.

While in the embodiment above the handle 5 is a separate handle, the handle of the present invention may be a one-piece handlebar. The separate handle is a handle arranged such that handlebars are connected to front forks without the intermediary of a handle crown. The one-piece handlebar is a handle arranged such that a handlebar is directly connected to a handle crown.

In the embodiment above, the handle 5 is provided with the throttle grip 5c. In this regard, when the present invention is employed for an ATV or the like, an accelerator lever replaces the throttle grip. Furthermore, while in the embodiment above the handle 5 is provided with the clutch lever 5f, no clutch lever is provided on the handle when the present invention is employed for a clutchless vehicle.

## Claims

1. A saddle type vehicle (1) comprising:
a vehicle body frame (4) supporting a power source (9);
a seat (11) mounted on the vehicle body frame (4);
a steering handle (5) provided forward of the seat (11);
a right grip section (5c) and a left grip section (5d) which are provided at a right end portion and a left end portion of the steering handle (5) in a vehicle left/right direction, respectively;
a display unit (15) which is provided forward of the seat (11) in a vehicle forward/rearward direction and between the right grip section (5c) and the left grip section (5d) in the vehicle left/right direction, and includes a display surface (15a);
an operation unit (120) which is supported by the steering handle (5), is configured to be operable by a hand gripping one of the right grip section (5c) and the left grip section (5d), and is electrically connected to the display unit (15);
a vehicle characteristic change controller (101) with which one of a first vehicle characteristic and a second vehicle characteristic, which are different from each other, is selectable in accordance with the content of an operation of the operation unit (120), and for each of the first vehicle characteristic and the second vehicle characteristic, switching between a state in which a change to another characteristic state is possible and a state in which the change is not possible is performed based on a state of at least one of a vehicle and a rider;
a state obtaining unit (100, 70) configured to obtain the state of at least one of the vehicle and the rider; and
a determination controller (74) configured to determine whether each of the first vehicle characteristic and the second vehicle characteristic is changeable to another characteristic state based on the state obtained by the state obtaining unit (100, 70),
**characterized in that**, based on a result of determination by the determination controller (74), the display unit (15) is configured to display, on the display surface (15a), a first vehicle characteristic icon indicating the first vehicle characteristic and a second vehicle characteristic icon indicating the second vehicle characteristic in such a way that, an icon of a vehicle characteristic which is currently selected and is changeable to another characteristic state is in a first aspect, an icon of a vehicle characteristic which is currently selected and is not changeable to another characteristic state is in a second aspect different from the first aspect, and an icon of a vehicle characteristic which is not currently selected is in a third aspect which is different from both the first aspect and the second aspect, and switching between the first aspect, the second aspect, and the third aspect occurs while the vehicle (1) is running.

2. The saddle type vehicle (1) according to claim 1, further comprising a related characteristic storage (72) configured to store plural related characteristics in each of which a first vehicle characteristic state, which is one of the characteristic states of the first vehicle characteristic, is associated with a second vehicle characteristic state, which is one of the characteristic states of the second vehicle characteristic, wherein the related characteristic storage (72) is configured to store at least a first related characteristic and a second related characteristic, one of which is selected based on the content of an operation of the operation unit (120).

3. The saddle type vehicle (1) according to claim 2, wherein, based on the state obtained by the state obtaining unit (100, 70), the determination controller (74) is configured to determine that the related characteristic is changeable to another related characteristic when the vehicle is not running and determining that the related characteristic is not changeable to another related characteristic when the vehicle is running.

4. The saddle type vehicle (1) according to claim 2 or 3, wherein one of the related characteristic, the first vehicle characteristic, and the second vehicle characteristic is selectable based on the content of an operation of the operation unit (120).

5. The saddle type vehicle (1) according to any one of claims 2 to 4, wherein, based on the result of determination by the determination controller (74), the display unit (15) is configured to display, on the display surface (15a), a related characteristic icon, which indicates the related characteristic, in the first aspect when the related characteristic is currently selected and changeable to another related characteristic, in the second aspect when the related characteristic is currently selected and not changeable to another related characteristic, or in the third aspect when the related characteristic is not currently selected.

6. The saddle type vehicle (1) according to any one of claims 1 to 5, wherein, the operation unit (120) includes a first switch (42) and a second switch (41, 43) which are different from each other.

7. The saddle type vehicle (1) according to claim 6, wherein each time the first switch (42) is operated once, a currently-selected vehicle characteristic is changed once to another vehicle characteristic.

8. The saddle type vehicle (1) according to claim 6 or 7, wherein, when the currently-selected vehicle characteristic is changeable to another characteristic state, each time the second switch (41, 43) is operated once, the characteristic state of the currently-selected vehicle characteristic is changed by one level.

9. The saddle type vehicle (1) according to any one of claims 1 to 8, wherein, the display unit (15) is configured to display, on the display surface (15a), the first vehicle characteristic icon and the second vehicle characteristic icon to be lined up in the vehicle left/right direction.

10. The saddle type vehicle (1) according to claim 9, when dependent upon any one of claims 6 to 8, wherein
the second switch (41, 43) is operable by an action of the rider in two directions along the circumference of the one of the right grip section (5c) and the left grip section (5d), and
when the currently-selected vehicle characteristic is changeable to another characteristic state, the characteristic state of the currently-selected vehicle characteristic is changed by one level if the second switch (41, 43) is operated once in one of the two directions, and the characteristic state of the currently-selected vehicle characteristic is changed by one level in the opposite direction if the second switch (41, 43) is operated once in the other one of the two directions.

## Patentansprüche

1. Spreizsitz-Fahrzeug (1), das umfasst:
einen Fahrzeug-Karosserierahmen (4), der eine Antriebsquelle (9) trägt;
einen Sitz (11), der an dem Fahrzeug-Karosserierahmen (4) angebracht ist;
einen Lenker (5), der sich vor dem Sitz (11) befindet;
einen rechten Griffabschnitt (5c) und einen linken Griffabschnitt (5d), die sich an einem rechten Endabschnitt bzw. einem linken Endabschnitt des Lenkers (5) in einer Fahrzeug-Breitenrichtung befinden;
eine Anzeige-Einheit (15), die sich in einer Fahrzeug-Längsrichtung vor dem Sitz (11) und in der Fahrzeug-Breitenrichtung zwischen dem rechten Griffabschnitt (5c) und dem linken Griffabschnitt (5d) befindet und eine Anzeigefläche (15a) enthält;
eine Betätigungs-Einheit (120), die von dem Lenker (5) getragen wird, so eingerichtet ist, dass sie mit einer Hand bedient werden kann, die den rechten Griffabschnitt (5c) oder den linken Griffabschnitt (5d) ergreift, und die elektrisch mit der Anzeige-Einheit (15) verbunden ist;
eine Steuereinrichtung (101) zum Ändern einer Fahrzeug-Eigenschaft, mit der eine erste Fahrzeug-Eigenschaft oder eine zweite Fahrzeug-Eigenschaft, die sich voneinander unterscheiden, entsprechend dem Inhalt einer Betätigung der Betätigungs-Einheit (120) ausgewählt werden kann, und Umschalten zwischen einem Zustand, in dem eine Änderung zu einem anderen Eigenschafts-Zustand möglich ist, und einem Zustand, in dem die Änderung nicht möglich ist, auf Basis eines Zustandes eines Fahrzeugs oder/und eines Fahrers durchgeführt wird;
eine Zustandsermittlungs-Einheit (100, 70), die zum Ermitteln des Zustandes des Fahrzeugs oder/und des Fahrers eingerichtet ist; und
eine Feststellungs-Steuereinrichtung (74), die so eingerichtet ist, dass sie auf Basis des durch die Zustandsermittlungs-Einheit (100/70) ermittelten Zustandes feststellt, ob die erste Fahrzeug-Eigenschaft und die zweite Fahrzeug-Eigenschaft jeweils zu einem anderen Eigenschafts-Zustand geändert werden kann,
**dadurch gekennzeichnet, dass**
die Anzeige-Einheit (15) so eingerichtet ist, dass sie auf Basis eines Ergebnisses der Feststellung durch die Feststellungs-Steuereinrichtung (74) an der Anzeigefläche (15a) ein Icon der ersten Fahrzeug-Eigenschaft, das die erste Fahrzeug-Eigenschaft angibt, und ein Icon der zweiten Fahrzeug-Eigenschaft, das die zweite Fahrzeug-Eigenschaft angibt, so anzeigt, dass ein Icon einer Fahrzeug-Eigenschaft, die aktuell ausgewählt ist und zu einem anderen Eigenschafts-Zustand geändert werden kann, in einer ersten Form erscheint, ein Icon einer Fahrzeug-Eigenschaft, die aktuell ausgewählt ist und nicht zu einem anderen Eigenschafts-Zustand geändert werden kann, in einer zweiten Form erscheint, die sich von der ersten Form unterscheidet, und ein Icon einer Fahrzeug-Eigenschaft, die aktuell nicht ausgewählt ist, in einer dritten Form erscheint, die sich sowohl von der ersten Form als auch der zweiten Form unterscheidet, und Wechseln zwischen der ersten Form, der zweiten Form und der dritten Form stattfindet während das Fahrzeug (1) fährt.

2. Spreizsitz-Fahrzeug (1) nach Anspruch 1, das des Weiteren einen Speicher (72) für im Zusammenhang stehende Eigenschaften umfasst, der so eingerichtet ist, dass er mehrere im Zusammenhang stehende Eigenschaften speichert, bei denen jeweils ein Zustand einer ersten Fahrzeug-Eigenschaft, der einer der Eigenschafts-Zustände der ersten Fahrzeug-Eigenschaft ist, mit einem Zustand einer zweiten Fahrzeug-Eigenschaft verknüpft ist, der einer der Eigenschafts-Zustände der zweiten Fahrzeug-Eigenschaft ist, und der Speicher (72) für im Zusammenhang stehende Eigenschaften so eingerichtet ist, dass er wenigstens eine erste im Zusammenhang stehende Eigenschaft und eine zweite im Zusammenhang stehende Eigenschaft speichert, von denen eine auf Basis des Inhalts einer Betätigung der Betätigungs-Einheit (120) ausgewählt wird.

3. Spreizsitz-Fahrzeug (1) nach Anspruch 2, wobei die Feststellungs-Steuereinrichtung (74) so eingerichtet ist, dass sie auf Basis des durch die Zustandsermittlungs-Einheit (100, 70) ermittelten Zustandes feststellt, dass die im Zusammenhang stehende Eigenschaft nicht zu einer anderen im Zusammenhang stehenden Eigenschaft geändert werden kann, wenn das Fahrzeug nicht fährt, und feststellt, dass die im Zusammenhang stehende Eigenschaft nicht zu einer anderen im Zusammenhang stehenden Eigenschaft geändert werden kann, wenn das Fahrzeug fährt.

4. Spreizsitz-Fahrzeug (1) nach Anspruch 2 oder 3, wobei eine von den im Zusammenhang stehenden Eigenschaften, der ersten Fahrzeug-Eigenschaft und der zweiten Fahrzeug-Eigenschaft auf Basis des Inhaltes einer Betätigung der Betätigungs-Einheit (120) ausgewählt werden kann.

5. Spreizsitz-Fahrzeug (1) nach einem der Ansprüche 2 bis 4, wobei die Anzeige-Einheit (15) so eingerichtet ist, dass sie auf Basis des Ergebnisses der Feststellung durch die Feststellungs-Steuereinrichtung (74) auf der Anzeigefläche (15) ein Icon der im Zusammenhang stehenden Eigenschaft, das die im Zusammenhang stehende Eigenschaft angibt, in der ersten Form anzeigt, wenn die im Zusammenhang stehende Eigenschaft aktuell ausgewählt ist und zu einer anderen im Zusammenhang stehenden Eigenschaft geändert werden kann, in der zweiten Form anzeigt, wenn die im Zusammenhang stehende Eigenschaft aktuell ausgewählt ist und nicht zu einer anderen im Zusammenhang stehenden Eigenschaft geändert werden kann, oder in der dritten Form anzeigt, wenn die im Zusammenhang stehende Eigenschaft aktuell nicht ausgewählt ist.

6. Spreizsitz-Fahrzeug (1) nach einem der Ansprüche 1 bis 5, wobei die Betätigungs-Einheit (120) einen ersten Schalter (42) und einen zweiten Schalter (41, 43) enthält, die sich voneinander unterscheiden.

7. Spreizsitz-Fahrzeug (1) nach Anspruch 6, wobei immer dann, wenn der erste Schalter (42) einmal betätigt wird, eine aktuell ausgewählte Fahrzeug-Eigenschaft einmal zu einer anderen Fahrzeug-Eigenschaft geändert wird.

8. Spreizsitz-Fahrzeug (1) nach Anspruch 6 oder 7, wobei, wenn die aktuell ausgewählte Fahrzeug-Eigenschaft zu einem anderen Eigenschafts-Zustand geändert werden kann, der Eigenschafts-Zustand der aktuell ausgewählten Fahrzeug-Eigenschaft, immer dann, wenn der zweite Schalter (41, 43) einmal betätigt wird, um eine Stufe geändert wird.

9. Spreizsitz-Fahrzeug (1) nach einem der Ansprüche 1 bis 8, wobei die Anzeige-Einheit (15) so eingerichtet ist, dass sie auf der Anzeigefläche (15a) das Icon der ersten Fahrzeug-Eigenschaft und das Icon der zweiten Fahrzeug-Eigenschaft in der FahrzeugQuerrichtung aufgereiht anzeigt.

10. Spreizsitz-Fahrzeug (1) nach Anspruch 9, wenn abhängig von einem der Ansprüche 6 bis 8, wobei
der zweite Schalter (41, 43) durch eine Bewegung des Fahrers in zwei Richtungen an dem Umfang des rechten Griffabschnitts (5c) oder des linken Griffabschnitts (5d) betätigt werden kann, und
wenn die aktuell ausgewählte Fahrzeug-Eigenschaft zu einer anderen Fahrzeug-Eigenschaft geändert werden kann, der Eigenschafts-Zustand der aktuell ausgewählten Fahrzeug-Eigenschaft um eine Stufe geändert wird, wenn der zweite Schalter (41, 43) einmal in einer der zwei Richtungen betätigt wird, und der Eigenschafts-Zustand der aktuell ausgewählten Fahrzeug-Eigenschaft um eine Stufe in der entgegengesetzten Richtung geändert wird, wenn der zweite Schalter (41, 43) einmal in der anderen der zwei Richtungen betätigt wird.

## Revendications

1. Véhicule du type à selle (1) comprenant :
un cadre de corps de véhicule (4) supportant une source motrice (9) ;
un siège (11) monté sur le cadre de corps de véhicule (4) ;
un guidon (5) disposé en avant du siège (11) ;
une section de préhension droite (5c) et une section de préhension gauche (5d) qui sont respectivement prévues au niveau de la partie d'extrémité droite et de la partie d'extrémité gauche du guidon (5) dans le sens gauche-droite du véhicule ;
une unité d'affichage (15) qui est prévue en avant du siège (11) dans le sens avant/arrière du véhicule et entre la section de préhension droite (5c) et la section de préhension gauche (5d) dans le sens gauche/droite du véhicule, et comporte une surface d'affichage (15a) ;
une unité fonctionnelle (120) qui est supportée par le guidon (5), est configurée pour pouvoir être actionnée par une main saisissant une de la section de préhension droite (5c) et de la section de préhension gauche (5d) et est connectée électriquement à l'unité d'affichage (15) ;
un contrôleur de changement de caractéristique de véhicule (101) avec lequel une caractéristique d'une première caractéristique de véhicule et d'une seconde caractéristique de véhicule qui sont différentes l'une de l'autre, peut être choisie en fonction du contenu de l'actionnement de l'unité fonctionnelle (120), et pour chacune de la première caractéristique de véhicule et de la seconde caractéristique de véhicule, une permutation entre un état dans lequel un changement vers un autre état de caractéristique est possible et un état dans lequel le changement n'est pas possible est effectuée en se basant sur l'état d'au moins un du véhicule et du conducteur ;
une unité d'obtention d'état (100, 70) configurée pour obtenir l'état d'au moins un du véhicule et du conducteur ; et
un contrôleur de détermination (74) configuré pour déterminer si chaque caractéristique de la première caractéristique de véhicule et de la seconde caractéristique de véhicule peut être changée en un autre état de caractéristique en se basant sur l'état obtenu par l'unité d'obtention d'état (100, 70),
**caractérisé en ce que**
en se basant sur le résultat d'une détermination par le contrôleur de détermination (74), l'unité d'affichage (15) est configurée pour afficher sur la surface d'affichage (15a) une première icône de caractéristique de véhicule indiquant la première caractéristique de véhicule et une seconde icône de caractéristique de véhicule indiquant la seconde caractéristique de véhicule de telle manière qu'une icône de caractéristique de véhicule qui est actuellement sélectionnée et peut être changée en un autre état de caractéristique se présente sous un premier aspect, une icône de caractéristique de véhicule qui est actuellement sélectionnée et ne peut pas être changée en un autre état de caractéristique se présente sous un deuxième aspect différent du premier aspect, et une icône de caractéristique de véhicule qui n'est pas actuellement sélectionnée se présente sous un troisième aspect qui est différent à la fois du premier aspect et du deuxième aspect, et la commutation entre le premier aspect, le deuxième aspect et le troisième aspect s'effectue pendant que le véhicule (1) avance.

2. Véhicule du type à selle (1) selon la revendication 1, comprenant en outre une mémoire de caractéristiques associées (72) configurée pour mémoriser plusieurs caractéristiques associées dans chacune desquelles un premier état de caractéristique de véhicule, qui est un des états de caractéristique de la première caractéristique de véhicule, est associé avec un second état de caractéristique de véhicule, qui est un des états de caractéristique de la seconde caractéristique de véhicule, dans lequel la mémoire de caractéristiques associées (72) est configurée pour mémoriser au moins une première caractéristique associée et une seconde caractéristique associée, l'une d'entre elles étant sélectionnée en se basant sur le contenu de l'actionnement de l'unité fonctionnelle (120).

3. Véhicule du type à selle (1) selon la revendication 2, dans lequel, en se basant sur l'état obtenu par l'unité d'obtention d'état (100, 70), le contrôleur de détermination (74) est configuré pour déterminer que la caractéristique associée peut être changée en une autre caractéristique associée lorsque le véhicule n'avance pas et déterminer que la caractéristique associée ne peut pas être changée en une autre caractéristique associée lorsque le véhicule avance.

4. Véhicule du type à selle (1) selon la revendication 2 ou 3, dans lequel une caractéristique de la caractéristique associée, la première caractéristique de véhicule et la seconde caractéristique de véhicule peut être sélectionnée en se basant sur le contenu de l'actionnement de l'unité fonctionnelle (120).

5. Véhicule du type à selle (1) selon l'une quelconque des revendications 2 à 4, dans lequel, en se basant sur le résultat de la détermination par le contrôleur de détermination (74), l'unité d'affichage (15) est configurée pour afficher sur la surface d'affichage (15a) une icône de caractéristique associée, qui indique la caractéristique associée sous le premier aspect lorsque la caractéristique associée est actuellement sélectionnée et peut être changée en une autre caractéristique associée, sous le deuxième aspect lorsque la caractéristique associée est actuellement sélectionnée et ne peut pas être changée en une autre caractéristique associée ou sous le troisième aspect lorsque la caractéristique associée n'est pas actuellement sélectionnée.

6. Véhicule du type à selle (1) selon l'une quelconque des revendications 1 à 5, dans lequel l'unité fonctionnelle (120) comporte un premier commutateur (42) et un second commutateur (41, 43) qui sont différents l'un de l'autre.

7. Véhicule du type à selle (1) selon la revendication 6, dans lequel, à chaque fois que le premier commutateur (42) est actionné une fois, une caractéristique de véhicule actuellement sélectionnée est changée une fois en une autre caractéristique de véhicule.

8. Véhicule du type à selle (1) selon la revendication 6 ou 7, dans lequel, lorsque la caractéristique de véhicule actuellement sélectionnée peut être changée en un autre état de caractéristique, à chaque fois que le second commutateur (41, 43) est actionné une fois, l'état de caractéristique de la caractéristique de véhicule actuellement sélectionnée est changé d'un niveau.

9. Véhicule du type à selle (1) selon l'une quelconque des revendications 1 à 8, dans lequel l'unité d'affichage (15) est configurée pour afficher, sur la surface d'affichage (15a) la première icône de caractéristique de véhicule et la seconde icône de caractéristique de véhicule de façon à être alignées dans le sens gauche/droite du véhicule.

10. Véhicule du type à selle (1) selon la revendication 9, lorsqu'elle dépend de l'une quelconque des revendications 6 à 8, dans lequel
le second commutateur (41, 43) peut être actionné par une action du conducteur dans deux directions le long de la circonférence d'une de la section de préhension droite (5c) et de la section de préhension gauche (5d), et
lorsque la caractéristique de véhicule actuellement sélectionnée peut être changée en un autre état de caractéristique, l'état de caractéristique de la caractéristique de véhicule actuellement sélectionnée est changé d'un niveau si le second commutateur (41, 43) est actionné une fois dans une des deux directions, et l'état de caractéristique de la caractéristique de véhicule actuellement sélectionnée est changé d'un niveau dans la direction opposée si le second commutateur (41, 43) est actionné une fois dans l'autre des deux directions.
